**Europäisches Patentamt**

**European Patent Office**

**Office européen des brevets**

(19)

(11) Veröffentlichungsnummer : **0 366 107 B1**

(12) # EUROPÄISCHE PATENTSCHRIFT

(45) Veröffentlichungstag der Patentschrift :
**09.12.92 Patentblatt 92/50**

(51) Int. Cl.$^5$ : **B21D 43/09**

(21) Anmeldenummer : **89119811.1**

(22) Anmeldetag : **25.10.89**

(54) **Vorrichtung zum Steuern des Vorschubs eines schrittweise vorschiebenden Vorschubapparates.**

(30) Priorität : **26.10.88 CH 3983/88**

(43) Veröffentlichungstag der Anmeldung :
**02.05.90 Patentblatt 90/18**

(45) Bekanntmachung des Hinweises auf die
Patenterteilung :
**09.12.92 Patentblatt 92/50**

(84) Benannte Vertragsstaaten :
**CH DE FR GB IT LI NL**

(56) Entgegenhaltungen :
**CH-A- 360 269**
**DE-A- 1 552 057**

(56) Entgegenhaltungen :
**DE-A- 2 137 743**
**US-A- 1 388 303**
**US-A- 2 152 932**
**US-A- 2 753 183**
**US-A- 3 784 075**

(73) Patentinhaber : **BRUDERER AG**
**Am Bach**
**CH-9320 Frasnacht (CH)**

(72) Erfinder : **Messner, Helmut**
**Scheibenstrasse 9**
**CH-9320 Arbon (CH)**

(74) Vertreter : **Blum, Rudolf Emil Ernst et al**
**c/o E. Blum & Co Patentanwälte Vorderberg 11**
**CH-8044 Zürich (CH)**

**Beschreibung**

Die vorliegende Erfindung betrifft eine Vorrichtung zum Steuern des Vorschubs eines zum schrittweisen Vorschieben eines bandförmigen Werkstückes bestimmten Vorschubapparates.

In der US-A 3 758 011 und der US-A 3 784 075, die als nächstliegender Stand der Technik angesehen wird, ist jeweils eine Vorrichtung zum schrittweisen Vorschieben eines Werkstückes offenbart, bei welcher ein festgelegtes Verhältnis zwischen der Drehzahl der Antriebswelle und der Phase der Oszillation vorhanden ist. Dieses Verhältnis lässt sich bei den bekannten Vorrichtungen, nachdem es einmal eingestellt worden ist, nicht oder nur mit grossen Aufwendungen verändern.

Hier will die Erfindung Abhilfe schaffen. Die Erfindung, wie sie in den Ansprüchen gekennzeichnet ist, läst--die Aufgabe, eine Vorrichtung zum Steuern des Vorschubs eines Vorschubapparates zu schaffen, bei welcher ein Umlaufgetriebe ein arretierbares Sonnenrad aufweist und mit einem verschiebbaren Büchsenabschnitt verbunden ist, der mit einem Exzenterglied einer Bewegungsübertragungsvorrichtung verbunden ist.

Die durch die Erfindung erreichten Vorteile sind im wesentlichen darin zu sehen, dass das Verhältnis zwischen der Drehzahl der Antriebswelle und der Phase der Oszillation zum Vorschieben durch ein einfaches Schalten an der Maschine gewählt werden kann und das Uebersetzungsverhältnis zwischen Antrieb und Vorschubwalze und auch die Totpunktlagen der Vorschubwalze durch einfaches Umschalten gewählt werden kann.

Im folgenden wird die Erfindung anhand mehrere Ausführungswege darstellenden Zeichnungen beispielsweise näher erläutert.

Es zeigen:
Figur 1 eine erste Ausführungsform einer Vorschubvorrichtung im Schnitt,
Figur 2 einen Schnitt entlang der Linie I-I der Figur 1,
Figur 3 einen Schnitt entlang der Linie II-II der Figur 1,
Figuren 4 und 5 eine Einrichtung zum oszillierenden Antreiben mindestens einer Welle, und
Figur 6 eine Vorrichtung zum Steuern bzw. Umschalten des Vorschubs.

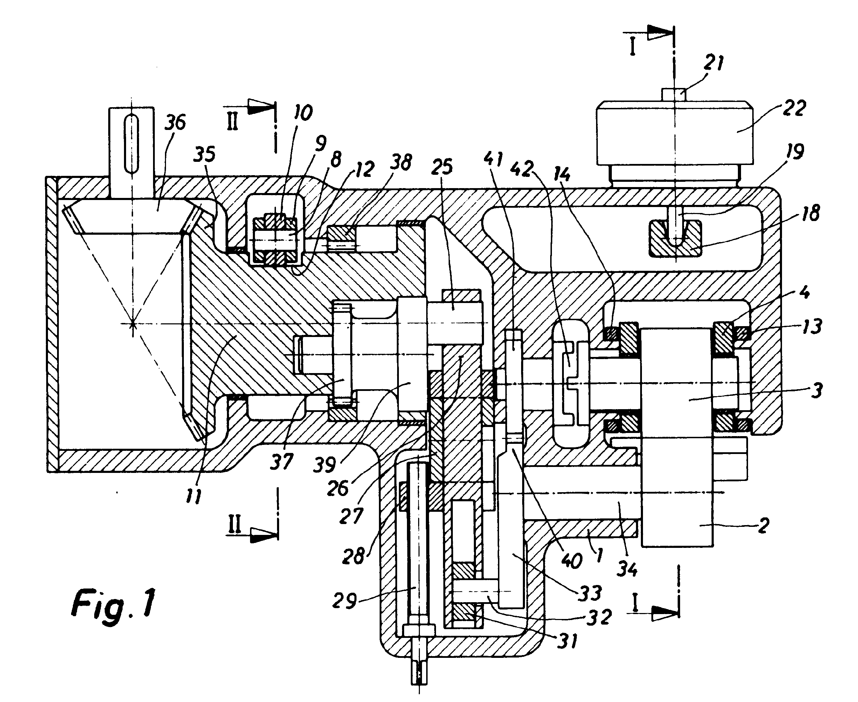

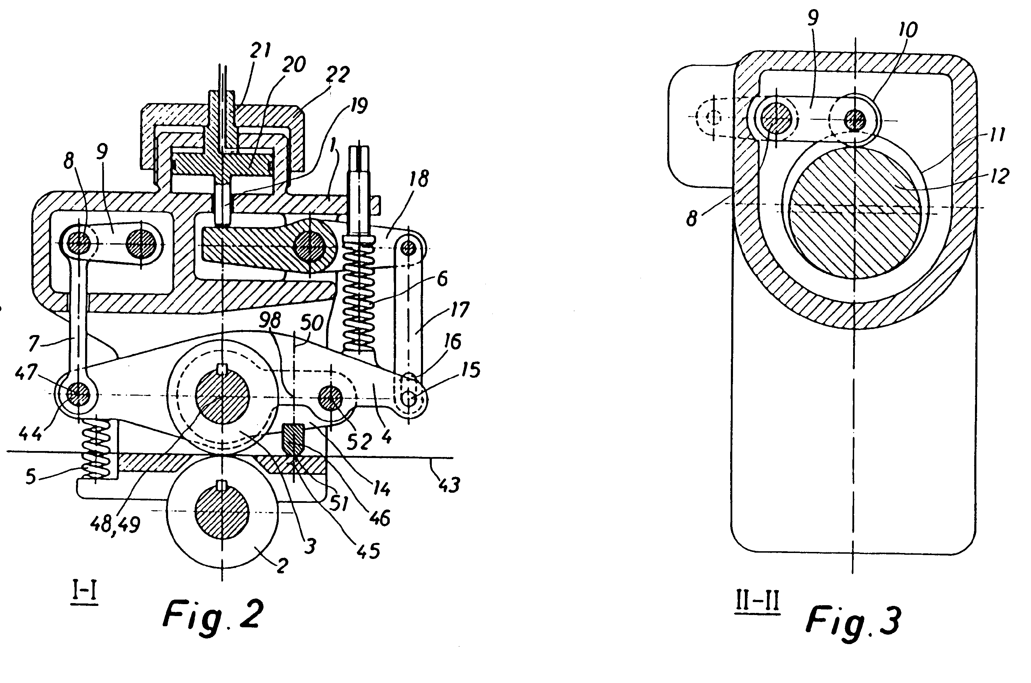

Die in den Figuren 1 bis 3 dargestellte Vorrichtung zum schrittweisen Vorschieben von bandförmigen Werkstücken, beispielsweise Blechbänder, weist ein Gehäuse 1 auf. In diesem Gehäuse 1 ist ein oszillierendes Vorschubglied 2 gelagert, welches in dem in den Figuren 1 und 2 gezeigten Ausführungsbeispiel eine untere Vorschubwalze ist. Weiter ist eine verstellbar gelagerte und benachbart zum oszillierenden Vorschubglied 2, d.h. der unteren Vorschubwalze angeordnete Presswalze 3 vorhanden. Diese Presswalze 3 ist in dem Ausführungsbeispiel nach den Figuren 1 und 2 als angetriebene obere Vorschubwalze ausgebildet. Diese beiden Vorschubwalzen 2 und 3 dieser Ausführung werden auf noch zu beschreibende Weise oszillierend und gegenläufig angetrieben. Die obere Vorschubwalze 3 ist an ihren beiden Enden in einer Wippe 4 drehbar gelagert, die auf beiden Seiten der oberen Vorschubwalze 3 je über eine Feder 5 bzw. 6 am Gehäuse 1 abgestützt ist. An ihrem auf der Feder 5 abgestützten Ende ist die Wippe 4 über ein Gestängeglied, einer Stange 7 über eine Welle 8 an einem Arm 9 angelenkt, welcher an seinem freien Ende eine drehbar befestigte Rolle 10 trägt. Diese Rolle 10 wirkt mit einem auf einer Antriebswelle 11 ausgebildeten Nockenglied 12 zusammen. Der Antrieb der Antriebswelle 11 ist mit dem Antrieb der Vorschubwalzen 2 und 3 gekoppelt und wird später genauer beschrieben werden. An der Wippe 4 ist ein Armpaar 13,14 angelenkt, welches beim entgegengesetzten Ende am Gehäuse 1 angelenkt ist. Im Armpaar 13,14 ist ein Anpresslineal 46 eingesetzt.

An ihrem auf der Feder 6 abgestützten Ende weist die Wippe 4 einen Zapfen 15 auf, der ein Langloch 16 eines Traggliedes 17 durchsetzt. Dieses Tragglied 17 ist an einem Doppelarm 18 angelenkt, auf den die Kolbenstange 19 eines Kolbens 20 einwirkt. Am Kolben 20 ist weiter ein Zapfen 21 angebracht, der mit einer mit dem Gehäuse 1 im Schraubeingriff stehenden Verstellmutter 22 zusammenwirkt.

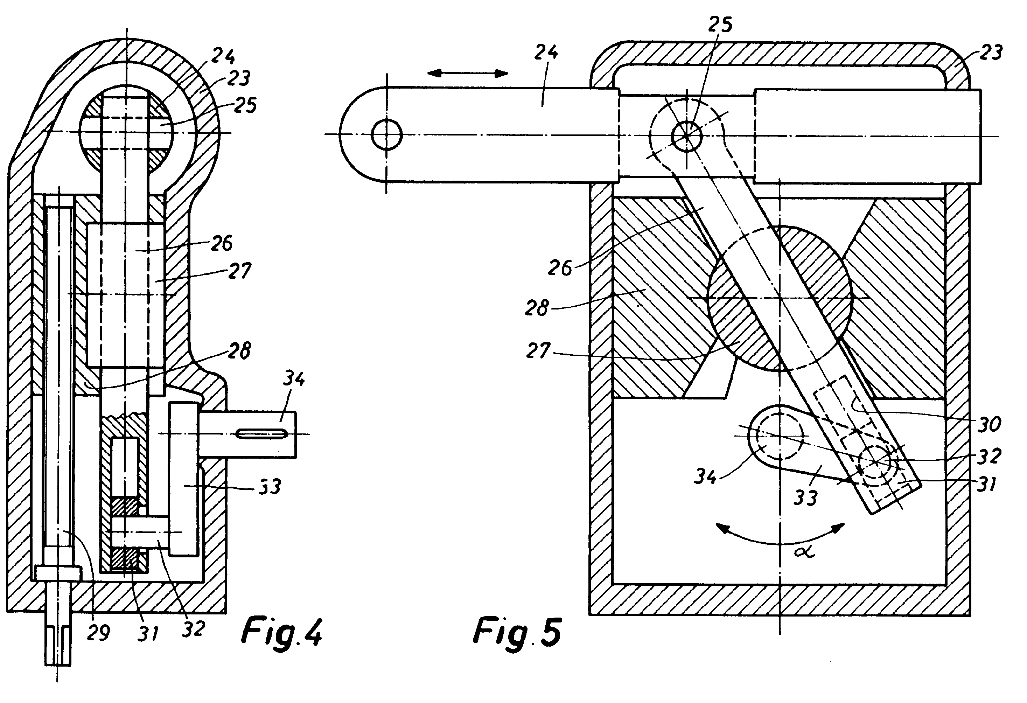

Anhand der Figuren 4 und 5 wird nun schematisch die Wirkungsweise des Antriebs zum oszillierenden Antreiben mindestens einer Welle beschrieben.

Eine in einem Gehäuse 23 längsverschiebbar gelagerte Stange 24 wird auf geeignete Weise, z.B. mittels eines Kurbeltriebes, hin- und herbewegt und treibt einen über einen Zapfen 25 schwenkbar mit ihr verbundenen Hebel 26 an. Dieser Hebel 26 ist in einem trommelförmigen Führungsorgan 27 geführt, welches in einem Lagerbock 28 mit einem Innengewinde gelagert ist. Der Lagerbock 28 ist im Gehäuse 23 gegen Verdrehung gesichert und von einer Schraubspindel 29 durchsetzt. Beim Drehen der Spindel 29 verschiebt sich der Lagerbock 28 zusammen mit dem Führungsorgan 27, wodurch der Drehpunkt des Hebels 26 verstellt werden kann.

Der Hebel 26 ist als Hohlprofil mit innenliegenden Gleitflächen 30 ausgebildet, in welchem ein Gleitstein 31 gelagert ist. Dieser Gleitstein 31 ist vom Zapfen 32 einer Kurbel 33 durchsetzt. Diese Kurbel 33 ist mit der oszillierend anzutreibenden Welle 34 verbunden.

Wird nun die Stange 24 translatorisch hin- und herbewegt, so wird der Hebel 26 mit der Achse des trommelförmigen Führungsorgans 27 als Drehachse hin- und her gedreht. Die Schwenkbewegung des Endes des Hebels 26 wird über den Gleitstein 31 und dem darin gelagerten Zapfen 32 über die Kurbel 33 auf die anzutreibende Welle 34 übertragen, wodurch diese Welle 34 oszillierend angetrieben wird.

Durch Drehen der Schraubspindel 29 kann die Drehachse des Hebels 26 verstellt werden, wodurch die Grösse des Ausschlages des den Gleitstein 31 tragenden Endes des Hebels 26 und damit die Amplitude der Oszillationsbewegung der Welle 34 verändert werden kann.

Dabei ist wesentlich, dass die Translationsbewegung der längsverschiebbar gelagerten Stange 24 und die Bewegung des Zapfens 25 unabhängig vom genannten Ausschlag des Hebels 26 immer gleich ist und der Zapfen 25 immer dieselben Endlagen, in denen seine Bewegungsrichtung umgekehrt wird, einnimmt. Das trommelförmige Führungsorgan 27 ist derart drehbar im Lagerbock 28 eingesetzt, dass der geometrische Mittelpunkt des trommelförmigen Führungsorgans 27 auf der Mittelachse des Hebels 26 liegt. Durch diese Anordnung und dadurch, dass der Gleitstein 31 im Hebel 26 translatorisch verschiebbar gelagert ist, ist nun der Hebel 26 keinen Torsionsbeanspruchungen, sondern nur noch Biegebeanspruchungen ausgesetzt, so dass eine kleinere innere Federung der Vorrichtung erzielt ist. Weiter lässt sich nun das Gehäuse 23 verhältnismässig schmal bauen, so dass eine Platzeinsparung erzielt ist.

Anhand der Figuren 1-3 wird nun beschrieben, wie das oben dargelegte Antriebsprinzip auf den Antrieb der beispielsweisen beiden Vorschubwalzen 2 und 3 angewandt ist. Die Antriebswelle 11 trägt an ihrem einen Ende ein Zahnrad 35, das mit einem von einem nicht dargestellten Hauptantrieb angetriebenen Antriebszahnrad 36 kämmt. In der Antriebswelle 11 ist ein Zahnrad 37 exzentrisch gelagert. Dieses Zahnrad 37 wälzt sich auf einen im Gehäuse 1 eingelassenen Zahnkranz 38 mit Innenverzahnung ab. Das Zahnrad 37 ist mit einer Scheibe 39 fest verbunden, welches einen exzentrisch angeordneten Zapfen 25 trägt, welcher Zapfen sowohl in der Figur 1, als auch in den Figuren 4-6 gezeichnet ist. Dieser Zapfen 25 ist mit dem Hebel 26 verbunden, in welchem der Gleitstein 31 angeordnet ist, welcher vom Zapfen 32 der Kurbel 33 durchsetzt ist, über welche die anzutreibende Welle 34 oszillierend angetrieben wird. Mittels der Schraubspindel 29 wird der Lagerbock 28, in dem das trommelförmige Führungsorgan 27 gelagert ist, je nach der zu wählenden Amplitude auf- bzw. abwärts geschraubt. Die Kurbel 33 weist ein Zahnsegment 40 auf, welches mit einem Zahnsegment einer Scheibe oder Schwinge 41 kämmt. Ueber eine geeignete Kupplung 42 wird die oszillierende Bewegung der Scheibe bzw. Schwinge 41 auf die obere Vorschubwalze 3 übertragen.

Damit werden die beiden Vorschubwalzen 2 und 3 gegenläufig oszillierend angetrieben.

Nachfolgend wird nun das schrittweise Vorschieben eines Werkstückes, z.B. eines Blechbandes 43, das zwischen den beiden Vorschubwalzen 2 und 3 angeordnet ist, beschrieben. Die Antriebswelle 11 weist, wie bereits dargelegt, ein in dieser Ausführung mit ihr einstückig ausgebildetes Nockenglied 12 auf. Beim Rotieren der Antriebswelle 11 führt die Rolle 10 eine oszillierende Bewegung aus, welche über den Arm 9, die seitlich gelegene Welle 8 auf die Stange 7 übertragen wird, die entsprechend oszilliert wird. Die Stange 7 ist über den Zapfen 44 an der Wippe 4 angelenkt.

Wird nun die Stange 7 nach unten bewegt, drückt sie die Wippe 4 gegen die Kraft der Feder nach unten. Durch die auf das auf der Feder 5 abgestützte Ende der Wippe 4 von der Stange 7 ausgeübte Kraft wird die Wippe 4 um den Zapfen 15 gegen das Blechband 43 abwärts geschwenkt. Die obere Vorschubwalze 2 wird gegen die untere, ortsfest gelagerte Vorschubwalze 3 gedrückt. Bei fortgesetzter Abwärtsbewegung der Stange 7 wird der Walzenspalt zwischen den Walzen 2 und 3 zum Drehpunkt der Wippe 4, womit das Anpresslineal 46 abgehoben wird. Die Stange 7 bewegt sich weiter nach unten, so dass die Wippe 4 weiter um den genannten Drehpunkt verschwenkt wird, wobei der Zapfen 15 im Langloch 16 verschoben wird. Die beiden Vorschubwalzen 2 und 3, die sich nun während dieser Periode in Vorschubrichtung drehen, greifen am Blechband 43 an und schieben es vorwärts (gemäss Figur 2 nach links). Nun beginnt sich die Stange 7 nach oben zu bewegen. Die Federn 5 und 6 bewirken nun ein Verschwenken der Wippe 4 um die Achse der Vorschubwalze 3, womit das Anpresslineal 46 wieder gesenkt wird und das Blechband 43 gegen einen Anschlag 45 presst und so festklemmt. Nach dem Festklemmen des Blechbandes 43 wird die obere Vorschubwalze 3 abgehoben. Die beiden Vorschubwalzen 2 und 3 wirken nun nicht mehr auf das Blechband 43 ein und führend während der Drehung der Antriebswelle 11 eine der Vorschubrichtung entgegengesetzte Rücklaufbewegung aus.

Durch die gezeigte Anordnung ist es nicht notwendig, an der Wippe irgendwelche Vorkehrungen zur Aufnahme verschiedener Dicken des vorzuschiebenden Blechbandes 43 vorzukehren.

Die Vorschublänge wird durch Verändern der Amplitude der Oszillationsbewegung der Vorschubwalzen verändert, d.h. wie erwähnt durch Verschieben des Lagerbocks 28 längs der Schraubspindel 29.

Zum Einführen des vorzuschiebenden Blechbandes 43 wird durch Senken des Kolbens 20 die Wippe 4 über das Tragglied 17 angehoben. Dabei wird der Zapfen 44 zur Schwenkstelle der Wippe 4, womit die Vorschubwalze 3 abgehoben wird. Da offensichtlich auch das Anpresslineal 46 angehoben wird, weil sich die Arme 13,14 um ihre Anlenkstelle am Gehäuse 1 verschwenken, lässt sich ein Blechband 43 frei einführen. Die Verstellmutter 22, welche über den Zapfen 21 die Grundstellung des Kolbens 20 bestimmt, dient zur Einstellung der Höhenstellung des Traggliedes 17, insbesondere des Langloches 16. Es ist gesagt worden, dass beim Verschwenken der Wippe 4 sich der Zapfen 15 im Langloch 16 bewegt. Wird während der Aufwärtsbewegung der Stange 7 vorerst die Rolle 3 und danach das Anpresslineal 46 vom Blechband 43 abgehoben, liegt dieses kurzzeitig frei, so dass die bekannten, am jeweiligen Werkzeug einer Stanzpresse vorhandenen Fangstifte das Blechband 43 zentrieren können. Mittels der Verstellmutter 22 lässt sich somit die Zeitspanne zum Zentrieren des Blechbandes 43 mittels der Fangstifte steuern.

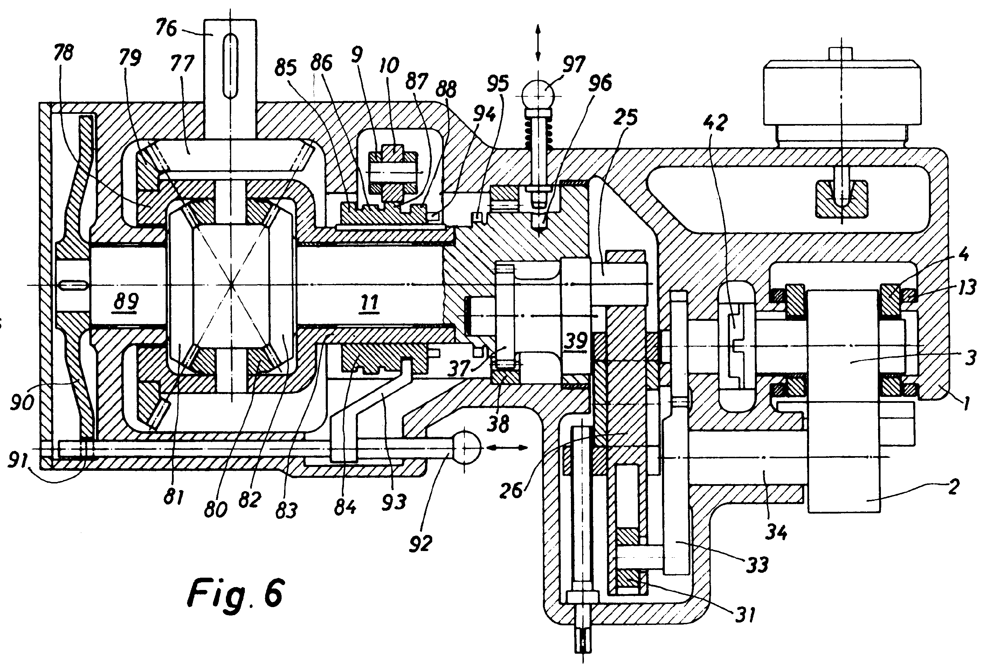

Die Figur 6 zeigt nun eine Vorrichtung zum Umschalten bzw. Steuern des Vorschubs, welche eine bevorzugte Ausführung der Erfindung ist. Es wird darauf hingewiesen, dass der allgemeine Aufbau dieser Ausführung anhand der Figur 1 beschrieben worden ist, so dass auf eine Wiederholung der entsprechenden Beschreibung verzichtet wird.

Der Antrieb der Vorrichtung erfolgt von einer nicht gezeigten Antriebsquelle über die Treibwelle 76. Auf dieser Treibwelle sitzt das treibende Zahnrad 77. Dieses treibende Zahnrad 77 kämmt mit dem Steg 78 eines Umlaufgetriebes, welcher Steg 78 zu diesem Zweck mit einem Zahnkranz 79 ausgerüstet ist. Dieser Steg 78 trägt die Planetenräder 80. Diese Planetenräder 80 kämmen einerseits mit einem arretierbaren Sonnenrad 81, auf welches später noch im einzelnen eingegangen wird. Andererseits kämmen die Planetenräder 80 mit einem Abtriebssonnenrad 82, welches mit der aus der Beschreibung der Figur 1 bekannten Antriebswelle 11 drehfest verbunden ist. Die Antriebswelle 11 ist in einem axialen Büchsenabschnitt 83 drehbar gelagert, welcher ein einstückiger Teil des Steges 78 des Umlaufgetriebes ist. In der Abtriebswelle 11 ist das Zahnrad 37 exzentrisch gelagert, welches mit einem innenverzahnten Zahnkranz 38 kämmt, welches Zahnrad 37 mit der den Zapfen 25 tragenden Scheibe 39 verbunden ist. Der Zapfen 25 wirkt auf den schwingenden Hebel 26 mit dem Gleitstein 31, welcher schlussendlich über die Kurbel 33 auf die anzutreibende Welle 34 und die Vorschubwalzen 2 und 3 einwirkt.

Auf dem Büchsenabschnitt 83 ist eine Schiebebüchse 83 drehfest und axial verschiebbar angeordnet. Diese trägt eine Anzahl Steuerscheiben, welche der Funktion nach dem Nockenglied 12 der Figur 1 entsprechen. Diese Steuerscheiben steuern die Bewegung der auf jeweils einer derselben aufliegenden Rolle 10, die über den Arm 9 mit dem Gestängeglied 7 zum Bewegen der Wippe 4 verbunden ist.

Das arretierbare Sonnenrad 81, mit dem die Planetenräder 80 kämmen, ist über ein Wellenstück 89 mit einer Arretierscheibe 90 verbunden, welche mindestens eine, am Umfang gelegene Arretierausnehmung 91 aufweist.

Im Gehäuse 1 ist ein Steuerschieber 92 längsverschiebbar gelagert, der bei seinem vorderen Endabschnitt in die Arretierausnehmung 91 hinein- bzw. aus dieser herausbewegbar ist. Dieser Steuerschieber weist weiter einen Mitnehmer 93 auf, welcher in einen Zwischenraum zwischen den Steuerscheiben 87 und 88 hineinragt. Damit lässt sich die Schiebebüchse 84 mittels dem Steuerschieber 92 auf dem Büchsenabschnitt 83 hin und her verschieben, um diejenige der Steuerscheiben 85-88 auszuwählen, auf welcher die Rolle 10 aufzuliegen hat.

Die Schiebebüchse 84 weist weiter axial abstehende Koppelglieder 94 auf, welche zum Eingriff mit Koppelgliedern 95 gebracht werden können, welche auf der Antriebswelle 11 angeordnet sind. Die Antriebswelle 11 weist weiter beim das Exzenterglied bildenden Abschnitt eine Ausnehmung 96 auf, in welches ein im Gehäuse 1 längsverschiebbares Arretierglied 97 eingesetzt werden kann.

Nachfolgend wird nun der Betrieb dieser Steuervorrichtung beschrieben. Dabei wird von der in der Figur 6 gezeichneten Stellung der verschiedenen Steuerteile ausgegangen. Durch die rotierende Treibwelle 76 wird das treibende Zahnrad 77 rotiert, welches über den Zahnkranz 79 den Steg 78 des Umlaufgetriebes treibt. In der gezeichneten Stellung des Steuerschiebers 92 ist sein vorderer Endabschnitt in der Arretierausnehmung 91 eingesetzt, so dass die Arretierscheibe 90 und damit das arretierbare Sonnenrad 81 im arretierten Zustand sind.

Der Steg 78 rotiert somit um das arretierte Sonnenrad 81, wobei sich die Planetenräder 80 am arretierten Sonnenrad 81 abwälzen. Damit wird das Abtrienssonnenrad 82 durch die Planetenräder 80 rotiert, welches Abtriebssonnenrad 82 entsprechend die Antriebswelle 11 rotiert, womit über die beschriebenen Vorrichtungsteile schlussendlich die Vorschubwalzen 2 und 3 oszillierend bewegt werden. Durch die auf der Steuerscheibe 27 aufliegende Rolle 10 wird die Wippe und entsprechend die Auf- und Abwärtsbewegung der Vorschubwalze 3 zeitlich gesteuert, so dass der anhand der Figuren 1-3 beschriebene Betriebsablauf stattfindet.

Wenn der Steuerschieber 92 in der Figur vollständig nach rechts verschoben ist, gibt er die Arretierscheibe 90 und somit das arretierbare Sonnenrad 81 frei. In dieser Stellung aber sind die Koppelglieder 94 der Schiebebüchse 84 mit den Koppelgliedern 95 der Abtriebswelle 11 im gekoppelten Zustand.

Bei rotierender Treibwelle 76 und rotierendem treibendem Zahnrad 77 wälzen sich die Planetenräder 80 nicht mehr auf dem sich nun frei drehbaren nicht arretierten Sonnenrad 81 ab. Die Drehbewegung des Steges 78 setzt sich über den Büchsenabschnitt 83 und damit drehfest verbundener Schiebebüchse 48 über die Koppelglieder 94,95 direkt auf die Antriebswelle 11 fort. Dabei liegt die Rolle 10 auf der linksäussersten Steuerscheibe 85 auf. Diese ist nun in diesem Beispiel derart ausgebildet, dass die obere Vorschubwalze 3 während 180° der Drehbewegung der Antriebswelle auf dem vorzuschiebenden Blechband 43 aufliegt. Es herrscht also eine direkte Antriebsübertragung vor.

Wird der Steuerschieber 92 um eine Steuerscheibenstufe nach links geschoben, steht sein vorderes Ende im arretierenden Eingriff mit der Arretierscheibe 90 des arretierbaren Sonnenrades 81 und die Rolle 10 läuft nun auf der Steuerscheibe 86. Damit wird einerseits aufgrund des arretierten Sonnenrades 81 ein anderes Uebersetzungsverhältnis, z.B. 1:2 zwischen der Treibwelle 76 und der Antriebswelle 11 erreicht und andererseits kann nun die Steuerscheibe 86 derart geformt sein, dass ein Aufliegen der Vorschubwalzen nur während 90° und beispielsweise in bezug auf die Phase symmetrisch bei einer beispielsweisen Stanzbewegung einer Stanzpresse auf dem vorzuschiebenden Blechband 43 stattfindet.

Wird der Steuerschieber 92 eine Stufe weiter nach links verschoben, so dass die Rolle 10 auf der Steuer scheibe 87 aufliegt, welche Stellung in der Figur 6 gezeichnet ist, bleibt das arretierbare Sonnenrad 81 arretiert und nun kann beispielsweise ein Aufliegen der Vorschubwalzen 2 und 3 während 90° vor dem oberen Totpunkt der Stanzbewegung stattfinden. In der äussersten Vorschiebestellung des Steuerschiebers 92 liegt die Rolle 10 auf der Steuerscheibe 88 auf, wobei hier beispielsweise ein Aufliegen während 90° nach dem oberen Totpunkt der Stanzbewegung stattfinden kann.

Es muss noch bemerkt werden, dass in derjenigen Stellung des Steuerschiebers 92, bei welcher die Kuppelglieder 94 und 95 gekoppelt sind, ein Uebersetzungsverhältnis zwischen der Welle 76 und der Welle 11 von 1:1 vorhanden ist und wenn das arretierbare Sonnenrad 81 arretiert ist, ein Uebersetzungsverhältnis von 1:2 vorhanden ist.

Wenn das Arretierglied 97 in der Ausnehmung 96 eingeschoben ist und durch den Steuerschieber 92 das arretierbare Sonnenrad 81 freigegeben worden ist, kann zu Einstellungszwecken der Vorrichtung die Schwenkstellung des Hebels 26 relativ zur Drehstellung der Teibwelle 76 geändert werden.

**Patentansprüche**

1. Vorrichtung zum Steuern des Vorschubs eines zum schrittweisen Vorschieben eines bandförmigen Werkstücks bestimmten Vorschubapparates, gekennzeichnet durch
   ein Umlaufgetriebe mit einem Steg (78), welcher einen Zahnkranz (79), der mit einem treibenden Zahnrad (77) kämmt und Planetenräder (80) trägt, die einerseits mit einem arretierbaren Sonnenrad (81) kämmen und anderseits mit einem auf einer Welle (11) sitzenden Abtriebssonnenrad (82) kämmen, welches in einem axialen Büchsenabschnitt (83) des Steges (78) drehbar gelagert und mit einem Exzenterglied einer Uebertragungsvorrichtung (37, 38, 39) verbunden ist, die dazu bestimmt ist, die Drehbewegung der Welle (11) des Abtriebssonnenrades (82) in eine oszillierende Bewegung zum Antrieb des Vorschubapparates umzusetzen,
   durch eine Anzahl Steuerscheiben (85 - 88), die auf einer Schiebebüchse (84) ausgebildet sind, welche auf dem axialen Büchsenabschnitt (83) des Steges (78) drehfest und axial verschiebbar angeordnet und dazu bestimmt sind, die Bewegung eines sich auf eine jeweilige Steuerscheibe (85 - 88) über eine Rolle (10) abstützenden Gestängegliedes einer Pressvorrichtung zu steuern, welche dazu bestimmt ist, intermittierend eine Presskraft auf ein vorzuschiebendes Werkstück auszuüben,
   welches arretierbare Sonnenrad (81) mit einer Arretierscheibe (90) verbunden ist, die eine an ihrem Umfang gelegene Arretierausnehmung (91) aufweist und mittels einem längsverschiebbar gelagerten Steuerschieber (92), der in die Arretierausnehmung (91) hinein- bzw. aus dieser herausbewegbar ist, gegen das Vorrichtungsgehäuse (1) arretierbar ist, welcher Steuerschieber (92) einen Mitnehmer (93) aufweist, der in einen Zwischenraum zwischen den Steuerscheiben (85 - 88) hineinragt, so dass gleichzeitig die axiale Stellung der die Steuerscheiben (85 - 88) enthaltende Schiebebüchse (84) wählbar ist,
   und welche durch den Steuerschieber (92) verschiebbare Schiebebüchse (84) Koppelglieder (94) aufweist, die zum Zusammenwirken mit dazugehörigen Koppelgliedern (95) des Exzentergliedes bestimmt sind, wobei im gekoppelten Zustand von Schiebebüchse (84) und Exzenterglied die Arretierscheibe (90) vom Steuerschieber (92) freigegeben ist, derart, dass zwischen dem Steg (78) und dem Umlaufgetriebe eine direkte Antriebsverbindung vorherrscht.

2. Vorrichtung nach Anspruch 1, gekennzeichnet durch ein im Vorrichtungsgehäuse (1) verschiebbar gelagertes Arretierglied (97), das in einer Bohrung (96) in der Welle (11) einschiebbar ist, um dieselbe am Vorrichtungsgehäuse (1) zu arretieren.

**Claims**

1. Apparatus for controlling the feed of a feed device intended for the stepwise feed of a striplike workpiece, characterized by an epicyclic gearing with a web (78), which supports a gear rim (79) which meshes with a driving gear wheel (77) and supports planet pinions (80) which mesh on the one hand with an arrestable sun wheel (81) and on the other hand with a output sun wheel (82) seated on a shaft (11), which is mounted for rotation in an axial bush section (83) of the web (78) and is connected to an eccentric member of a transmission device (37, 38, 39), which is intended to convert the rotary movement of the shaft (11) of the output sun wheel (82) into an oscillating movement for driving the feeding device, by a number of control disks (85 - 88), which are formed on a sliding bush (84) which are located in a non-rotary and axially displaceable manner on the axial bush section (83) of the web (78) and are intended to control the movement of a linkage member of a pressing device supported on a respective control disk by means of a roller (10), which device is intended to intermittently exert a pressing force onto a work-piece to be fed, which arrestable sun wheel (81) is connected to an arresting disk (90), which includes at its circumference an arresting recess (91), and is arrestable relative to the apparatus housing (1) by means of a longitudinally displaceable control slide (92), which is movable into and out of, respectively, the arresting recess (91), which control slide (92) includes a dog (93) which projects between the control disks (85 - 88) such that simultaneously the axial position of the sliding bush (84) containing the control disks (85 - 88) is selectable, and which sliding bush (84) which is displaceable by means of the control slide (92) includes coupling members (94) which are intended for a cooperation with associated coupling members (95) of the eccentric member, whereby in the coupled state of the sliding bush (84) and the eccentric member, the arresting disk (90) is released by the control slide (92) so that a direct driving connection prevails the web (78) and the epicyclic gearing.

2. Apparatus according to claim 1, characterized by an arresting member (97) supported slidingly in the apparatus housing (1), and which is insertable into a bore (96) in the shaft (11) in order to arrest same at the apparatus housing (1).

**Revendications**

1. Dispositif pour commander l'avance d'un appareil d'amenée destiné à faire avancer pas à pas une pièce à usiner en forme de bande, caractérisé par un engrenage planétaire ayant un porte-satellites (78), qui porte une couronne dentée (79) en prise avec une roue dentée (77) menante et comportant des roues satellites (80) qui engrènent d'une part une roue centrale (81) pouvant être bloquée et d'autre part avec une roue centrale entraînée (82) montée sur un arbre (11), lui-même monté à rotation dans une partie axiale formant douille (83) du porte-satellites (78) et relié à un élément d'excentrique d'un dispositif de transmission (37, 38, 39) destiné à convertir le mouvement de rotation de l'arbre (11) de la roue centrale entraînée (82) en un mouvement oscillant pour l'actionnement de l'appareil d'amenée, par des disques de commande (85 - 88) formés sur un manchon coulissant (84) solidaire en rotation avec la partie axiale formant douille (83) du porte-satellites (78) et mobile axialement sur cette partie axiale, et destinés à commander le mouvement d'un élément de tringlerie d'un dispositif presseur destiné à exercer de façon intermittente une force de pression sur une pièce à usiner devant être avancée, l'élément de tringlerie s'appuyant à chaque fois sur un disque de commande (85 - 88) par l'intermédiaire d'un galet (10), la roue centrale (81) et pouvant être bloquée étant reliée à un disque de blocage (90) qui présente à sa circonférence une encoche d'arrêt (91) et peut être immobilisé par rapport au boîtier (1) du dispositif à l'aide d'une tirette de commande (92) mobile longitudinalement et agencée pour être engagée dans l'encoche (91) ou extraite de celle-ci, la tirette (92) comportant un organe d'entrainement (93) qui s'étend dans un interstice entre les disques de commande (85 - 88) de façon que l'on puisse simultanément choisir la position axiale du manchon coulissant (84) qui porte les disques de commande (85 - 88), ce manchon coulissant (84) étant déplaçable par la tirette de commande (92) et comportant des éléments de couplage (94) destinés à coopérer avec des éléments de couplage correspondants (95) de l'élément d'excentrique, le disque de blocage (90) étant libéré de la tirette de commande (92) lorsque le manchon coulissant (84) est accouplé avec l'élément d'excentrique, de manière à ce qu'une liaison d'entraînement directe prédomine entre le porte-satellites (78) et l'engrenage planétaire.

2. Dispositif selon la revendication 1, caractérisé par un organe de blocage (97) monté de façon déplaçable dans le boîtier (1) du dispositif et pouvant être inséré dans un trou (96) pratiqué dans l'arbre (11) pour bloquer celui-ci par rapport audit boîtier (1).

Fig.1

EP 0 366 107 B1

I-I

**Fig. 2**

II-II  **Fig. 3**

EP 0 366 107 B1

Fig.4

Fig.5

EP 0 366 107 B1

Fig. 6

EP 0 366 107 B1